# EUROPEAN PATENT APPLICATION

(11) **EP 4 579 037 A1**
(43) Date of publication of application: **02.07.2025**
(21) Application number: 23220338.0
(22) Date of filing: 27.12.2023
(51) Int. Cl.: E01B 3/00, E01B 3/46, H02S 20/00, H01L 31/04

(54) **RAILWAY SLEEPER AND METHOD OF PRODUCING SAME**

(71) Applicant: Holyvolt AB, 183 57 Täby (SE)
(72) Inventor: STRUBE, Timon, 183 57 Täby (SE); BRAMS, Markus, 183 57 Täby (SE); ERDMANN, Robert, 183 57 Täby (SE)
(74) Representative: Ström & Gulliksson AB

(57) **Abstract**

A railway sleeper (100), comprising a railway sleeper body (110), extending in a length direction, L, and having a top portion and a bottom portion opposite to the top portion. The railway sleeper further comprises at least one smart sleeper module (200) removably arranged on the top portion of the railway sleeper body. The smart sleeper module(s) comprises at least one support structure (210) comprising a first plurality of sub-layers (215), at least one photovoltaic layer (220) arranged on the at least one support structure, wherein the photovoltaic layer(s) comprises a second plurality of sub-layers (225), and is configured to generate electric energy, and at least one encapsulation layer (230) at least partially enclosing the smart sleeper module(s), wherein the encapsulation layer(s) comprises a third plurality of sub-layers (235). Furthermore, each of the plurality of sub-layers comprises different material compositions.

## Description

### Technical field

The present invention relates to the technical field of railway sleepers. More specifically, the present invention relates to a railway sleeper and producing such railway sleeper.

### Background

Railway sleepers, also referred to as railroad ties or crossties, are support elements for rails in railway tracks. The sleepers hold the rails in place, maintain a suitable gauge on the railway track, and transfer loads to track ballast and subgrade. Hence, the sleepers contribute to the stability of the railroad infrastructure.

Sleepers have throughout their development been manufactured by various materials, wherein wood was initially used due to its availability and low cost. Concrete, steel, and composite materials are also examples of materials used for producing sleepers. Besides utilization of new and innovative materials, railway sleepers have been the object of additional improvements, such as advances in fastening systems between the sleepers and the track. Parallel to the traditional railway sleepers exists also slab tracks, or ballastless tracks, wherein the rails are directly attached to a solid concrete slab, thus eliminating the need for ballast. Other examples of innovation related to sleepers include incorporating monitoring technology in order to provide real-time data for maintenance and safety assessments, as well as inclusion of various energy harvesting systems, e.g., converting kinetic energy from passing trains into electric energy.

The electrification of railways began in the late 19^{th} century, replacing to some extent the steam engine driven trains. The electrified railways may provide trains with electricity via a nearly continuous conductor running along the track. The conductor generally falls into two groups, either as overhead suspended lines, or as a third rail mounted at track level.

Nonetheless, sleepers and railways are not without room for further improvement.

Due to the heavy applied load from passing trains, there is a high requirement on stability and resistance to wear. Furthermore, sleepers are exposed to the conditions of the surrounding environment, which may reduce longevity. The environmental impact may also pose a safety issue for passing trains, due to for example accumulated leaves, snow, and/or ice. This may also pose a hindrance for a passing train regarding access to electricity, thus risking stranding the train. Due to mentioned obstacles, railway sleepers require continuous maintenance.

Therefore, it is of interest to provide alternative solutions within the field of railway sleepers to mitigate at least some of the above-stated problems seen in the prior art.

### Summary

It is an object of the present invention to provide a durable and adaptable railway sleeper which is easy to install and maintain.

This and other objects may be achieved by a railway sleeper, a smart sleeper module, a railway system, and a method for producing the smart sleeper module, having the features in the independent claims. Preferred embodiments are defined in the dependent claims.

Hence, according to a first aspect of the invention, there is provided a railway sleeper, comprising a railway sleeper body extending in a length direction, L, and having a top portion and a bottom portion opposite to the top portion. The railway sleeper further comprises at least one smart sleeper module, removably arranged on the top portion of the railway sleeper body. The at least one smart sleeper module comprises at least one support structure comprising a first plurality of sub-layers and at least one photovoltaic layer arranged on the at least one support structure, wherein the at least one photovoltaic layer comprises a second plurality of sub-layers, and is configured to generate electric energy. The at least one smart sleeper module further comprises at least one encapsulation layer at least partially enclosing the at least one smart sleeper module, wherein the at least one encapsulation layer comprises a third plurality of sub-layers. Each of the plurality of sub-layers comprises different material compositions.

According to a second aspect of the invention, there is provided a smart sleeper module described herein.

According to a third aspect of the invention, there is provided a railway system comprising at least two railway sleepers, arranged parallel to each other in relation to their respective length direction, L, and railway tracks arranged parallel to each other and perpendicular to the at least two railway sleepers. The railway tracks are flexibly fastened to the at least two railway sleepers.

According to a fourth aspect of the invention, there is provided a method for producing a smart sleeper module, the method comprising providing the at least one support structure, and screen printing at least one of the at least one photovoltaic layer and the at least one encapsulation layer on the at least one support structure, forming the smart sleeper module.

Thus, the first, second, third, and fourth aspects of the present invention are based on the common concept or idea of providing a railway sleeper, a smart sleeper module, a railway system, or a method for producing the smart sleeper module, wherein the railway sleeper enables harvesting energy from its surrounding environment, while simultaneously being durable and versatile to different needs, desires, and/or requirements from a user. An example may be to retrofit the railway sleeper and/or the smart sleeper module into existing railway systems. This is achieved by a railway sleeper comprising a smart sleeper module removably arranged on the railway sleeper, wherein the smart sleeper module may generate electric energy via photovoltaics. Hence, the first, second, third, and fourth aspect of the present invention share a common general inventive concept of providing a railway sleeper comprising a removably arranged electric energy-generating smart sleeper module.

It will be appreciated that the at least one smart sleeper module is removably arranged on the top portion of the railway sleeper body. In other words, the smart sleeper module(s) may be removed from the railway sleeper body. Therefore, the maintenance of the smart sleeper module(s) and/or the railway sleeper may be facilitated. For example, if the smart sleeper module(s) malfunctions, said smart sleeper module(s) may be replaced with (a) non-malfunctioning smart sleeper module(s) without undue burden for a user. Also, the removably arranged smart sleeper module(s) facilitate(s) retrofitting the smart sleeper module(s) to various types and models of railway sleepers. Thus, the smart sleeper module(s) may be removably arranged on railway sleepers already in use in railway systems.

It will be further appreciated that the at least one smart sleeper module comprises at least one photovoltaic layer. This is beneficial as the photovoltaic layer(s) is (are) configured to generate electric energy, e.g., from daylight. According to an example, the generated electric energy may be used by the railway sleeper itself, transferred in order to power passing trains or other external devices, and/or stored for later use. As railway systems often cover a large area, it is advantageous to utilize this already occupied area to harvest solar energy. This is further desirable in order to reduce a dependency of non-renewable energy-sources, at least due to a reduced negative impact on the environment. Also, the photovoltaic layer(s) of the smart sleeper module(s) may reduce the need for external power sources, which may be particularly useful in remote areas.

It should be noted that the smart sleeper module(s) comprise(s) at least one support structure and at least one encapsulation layer. The support layer(s) allows for an improved structural integrity of the smart sleeper module(s). This is especially desirable as the smart sleeper module(s), (removably) arranged on a railway sleeper, may be exposed to large amounts of external forces such as mechanical stresses in the form of vibrations from passing railway vehicles. Furthermore, the encapsulation layer(s) at least partially enclose(s) the smart sleeper module(s). Hence, the encapsulation layer(s) act(s) as a barricade to the smart sleeper module(s) in terms of external impact from the surrounding environment. This is advantageous as e.g., the photovoltaic layer(s) may be sensitive to external forces and impact.

It should also be noted that the present invention allows at least one of the photovoltaic layer(s) and the encapsulation layer(s) of the smart sleeper module(s) to be screen printed. This enables a versatile and adaptable method of producing the smart sleeper module(s), in terms of need, requirements, and/or desires regarding e.g., design properties. Furthermore, screen printing at least one of the photovoltaic layer(s) and the encapsulation layer(s) provides for a highly precise, reproducible, and time efficient method for producing the smart sleeper module(s).

The at least one smart sleeper module is removably arranged on (the top portion of) the railway sleeper body. By "removably arranged", it is here meant that the smart sleeper module(s) is (are) detachably, adjustably, movably, reversibly, or the like, arranged. Hence, the smart sleeper module(s) may be removed from the railway sleeper body and arranged onto the railway sleeper body again if desired. This is beneficial if a smart sleeper module is in need of maintenance, and/or in need of replacement. The smart sleeper module(s) of the railway sleeper comprise(s) at least one support structure. By the term "support structure" it is here meant any component, element, member, or the like that can provide a structural integrity. Furthermore, said component, element, member, or the like is suitable to have additional components, elements, members, or the like arranged upon. The smart sleeper module(s) further comprise(s) at least one encapsulation layer. By the term "encapsulation layer" it is here meant any component, element, member, or the like that is suitable to function as an encapsulation, cover, barrier, shield, obstruction, or the like to at least a portion of the at least one smart sleeper module.

According to an embodiment of the present invention, the railway sleeper body may comprise a recess arranged on the top portion of the railway sleeper body and along the length direction, L, wherein the at least one smart sleeper module may be removably arranged in the recess of the railway sleeper body. Hence, the smart sleeper module(s) may be arranged in a recess of the railway sleeper body, along the length direction, L. The present embodiment is advantageous in that the smart sleeper module(s) may be more securely arranged on the railway sleeper body as it is (removably) arranged in the recess. Hence, the smart sleeper module(s) may be less exposed to the surrounding environment, which may cause damage to the smart sleeper modules(s) due to wind, rain, snow, etc. Consequently, the present embodiment may prolong the longevity of the railway sleeper and/or the smart sleeper module(s). Furthermore, the railway sleeper according to the present embodiment may require less space. Hence, the railway sleeper may be easier to handle during production, transportation, and/or during use.

According to an embodiment of the present invention, the top portion of the railway sleeper body may have a convex shape. For example, the top portion of the railway sleeper body may have the shape of a trapezoidal prism. The present embodiment is advantageous in that the convex shape of the railway sleeper body may reduce the amount of accumulated soiling on the railway sleeper, for example snow, rain, leaves, or the like. Preventing soiling to accumulate on the railway sleeper may ensure that passing railway vehicles maintain proper traction relative a railway system, and therefore ensuring an effective and safe braking system. Thus, the present embodiment may allow for a more secure railway sleeper in terms of e.g., passing railway vehicles and users thereof. Furthermore, maintenance of the railway sleeper may be facilitated and/or required to a lesser extent.

According to an embodiment of the present invention, the at least one smart sleeper module may have a first side and a second side opposite to the first side, wherein the first side of the at least one smart sleeper module may be configured to abut the railway sleeper body, and wherein the second side of the at least one smart sleeper module may have a convex shape. Hence, the second side of the smart sleeper module(s) is (are) facing away from the railway sleeper body. For example, the second side of the smart sleeper module(s) may have the shape of a trapezoidal prism. The present embodiment is advantageous in that the convex shape of the second side of the smart sleeper module(s) may reduce the amount of accumulated soiling on the smart sleeper module(s), for example snow, rain, leaves, or the like. It is beneficial to reduce the amount of soiling on the smart sleeper module(s) as the presence of soiling on the smart sleeper module(s) may result in lowered energy efficiency of the smart sleeper module(s) comprising the photovoltaic layer(s). Furthermore, the convex shape of the second side of the smart sleeper module(s) may enable an increased surface area for photovoltaic energy harvesting, as is performed by the photovoltaic layer(s) of the smart sleeper module(s). The convex shape of the second side of the smart sleeper module(s) may also allow for a more versatile and adaptable smart sleeper module(s) in regard to harvesting energy via the photovoltaic layer(s). For example, the present embodiment may allow for an increased energy efficiency during periods of few daylight hours, e.g., winter, by capturing a higher amount sunlight during shorter daylight hours. This due to the fact that the smart sleeper module(s), and thereof the photovoltaic layer(s), may be facing different directions, i.e., enabling capturing sunlight from a wider range of angles during the day. Hence, the present embodiment allows for optimized sunlight incidence and promoting even energy distribution throughout the day. Therefore, the present embodiment may also facilitate peak shaving.

According to an embodiment of the present invention, the at least one smart sleeper module may be at least partially flexible. In other words, the whole smart sleeper module(s) may be flexible, or only a portion. The present embodiment is advantageous in that (a) flexible smart sleeper module(s) may increase the durability and longevity of the smart sleeper module(s). For example, the flexibility of the smart sleeper module(s) may reduce the risk of the smart sleeper module(s) suffering damage from vibrations from passing railway vehicles. Furthermore, the present embodiment may provide for a more adaptable smart sleeper module(s), in regard to e.g., required and/or desired design properties. In addition, the smart sleeper module(s) may be easier to handle during production, transportation, and/or during use.

According to an embodiment of the present invention, the at least one smart sleeper module may comprise at least one energy storing layer arranged on the at least one support structure, wherein the at least one energy storing layer may comprise a fourth plurality of sub-layers comprising different material compositions from each of the other pluralities of sub-layers. The at least one energy storing layer may be configured to store at least a portion of the electric energy generated by the at least one photovoltaic layer. Hence, the energy storing layer(s) may be electrically connected to the photovoltaic layer(s), allowing the energy storing layer(s) to store at least a portion of generated electric energy by the photovoltaic layer(s). The present embodiment is advantageous in that excess energy generated by the photovoltaic layer(s) may be stored for later use. Thus, the energy storing layer(s) allows for (a) more versatile and adaptable smart sleeper module(s) in regard to e.g., a reduced dependency of immediate and relative high access to daylight energy. Hence, the energy storing layer(s) may efficiently generate electric energy even during e.g., a cloudy day. Also, the energy storing layer(s) of the smart sleeper module(s) may reduce the need for external power sources, which may be particularly useful in remote areas.

According to an embodiment of the present invention, the at least one smart sleeper module may comprise at least one heating layer arranged on the at least one support structure, wherein the at least one heating layer may comprise a fifth plurality of sub-layers comprising different material compositions from each of the other pluralities of sub-layers. The at least one heating layer may be configured to transform electric energy into thermal energy. Hence, the generated thermal energy may be emitted to the surroundings of the heating layer(s). The present embodiment is advantageous in that the emitted heat from the heating layer(s) may decrease the amount of soiling on the smart sleeper module(s). For example, the heating layer(s) may melt accumulated snow, frost, or ice on the smart sleeper module(s). Furthermore, the heating layer(s) may reduce adhesion of accumulated leaves and other debris on the smart sleeper module(s), thus facilitating the leaves and other debris to slide off the surface of the smart sleeper module(s). Hence, the present embodiment may ensure high operational safety for passing railway vehicles, and/or energy efficiency independent of, for example, weather conditions.

According to an embodiment of the present invention, the at least one heating layer of the at least one smart sleeper module may be configured to transform at least a portion of the electric energy from at least one of the at least one photovoltaic layer and the at least one energy storing layer into thermal energy. Hence, the heating layer(s) may be configured to transform electric energy from the photovoltaic layer(s), from the energy storing layer(s), and/or from another device such as an external device, into thermal energy. The generated thermal energy may be emitted to the surroundings of the heating layer(s). The present embodiment is advantageous in that the railway sleeper may be less dependent on external power sources, which may be particularly useful in remote areas. Furthermore, the present embodiment may provide for a railway sleeper comprising (a) heating layer(s) with a reduced negative impact on the environment.

According to an embodiment of the present invention, the at least one smart sleeper module may comprise at least one sensor configured to generate soiling data indicating an amount of soiling on at least a front side of the at least one photovoltaic layer, wherein the front side of the at least one photovoltaic layer is arranged to face away from the railway sleeper body. The smart sleeper module(s) may further comprise at least one control unit configured to control the at least one heating layer based on the soiling data. Hence, the sensor(s) may measure, monitor, detect, or the like an amount of soiling on (at least) the front side of the photovoltaic layer(s), where the control unit(s) may control the heating layer(s) based on the measurement(s) from the sensor(s). For example, a detected amount of soil, such as snow or ice, on at least the front side of the photovoltaic layer(s) may result in that the control unit(s) increases the thermal energy emitted from the heating layer(s), thus melting the snow or ice. The present embodiment is advantageous in that the occurrence of reduced energy efficiency of the photovoltaic layer(s) due to accumulated soiling may be prevented or reduced. Hence, the present embodiment may continue to generate electricity via the photovoltaic layer(s), independent of weather conditions. Furthermore, if there is no longer no detected amount of soiling on at least the front side of the photovoltaic layer(s), the control unit(s) may be configured to reduce the emitted thermal energy. Hence, unnecessarily emitting thermal energy is prevented or reduced. Thus, the present embodiment allows for a more versatile railway sleeper in terms of e.g., weather conditions, as well as increased energy efficiency.

According to an embodiment of the present invention, the at least one smart sleeper module may comprise a connector configured to electrically connect at least one of the least one photovoltaic layer and the at least one energy storing layer to a device, to provide electric energy to the device. The present embodiment is advantageous in that the connector connecting the device and at least one of the photovoltaic layer(s) and the energy storing layer(s) allows for providing electric energy to said device. Thus, generated electric energy from the photovoltaic layer(s) may be consumed by a device which may be an external device to the railway sleeper. This is beneficial for example in the presence of excess energy from the photovoltaic layer(s) and/or (a) energy storing layer(s) at full capacity. Thus, the present embodiment allows for providing electric energy to a device by (at least) the use of photovoltaics. This is desirable as the smart sleeper module(s) may provide electric energy to a device from a clean, renewable, and environmentally friendly source of energy.

According to an embodiment of the present invention, the at least one smart sleeper module may comprise at least one of at least one electric insulation layer, comprising a sixth plurality of sub-layers, at least one thermal insulation layer, comprising a seventh plurality of sub-layers, and at least one anti-reflection layer comprising an eight plurality of sub-layers, arranged on the at least one support structure. Each of the sixth plurality of sub-layers, the seventh plurality of sub-layers, and the eight plurality of sub-layers may comprise different material compositions from each of the other pluralities of sub-layers. Hence, the smart sleeper module(s) may comprise all of the electric insulation layer(s), the thermal insulation layer(s), and the anti-reflection layer(s), a combination of them, or only one. The present embodiment is advantageous in that it provides for (a) more versatile and energy efficient smart sleeper module(s). For example, the electric insulation layer(s) and/or the thermal insulation layer(s) may reduce the risk of energy leakage in the form of electricity and/or heat, thus allowing for (a) more energy efficient smart sleeper module(s). Furthermore, the anti-reflection layer(s) of the smart sleeper module(s) is advantageous as it may reduce the amount of potential glare from the smart sleeper module(s). Glare derived from the smart sleeper module(s) may be undesirable and damaging to e.g., train operators, aircraft operators, nearby residents, etc.

According to an embodiment of the present invention, at least one of the at least one support structure, the at least one photovoltaic layer, the at least one encapsulation layer, the at least one energy storing layer, the at least one heating layer, the at least one electric insulation layer, the at least one thermal insulation layer, and the at least one anti-reflection layer, may be screen printed. Thus, all, a combination, or only one of the photovoltaic layer(s), the encapsulation layer(s), the energy storing layer(s), the heating layer(s), the electric insulation layer(s), the thermal insulation layer(s), and the anti-reflection layer(s), may be screen printed. This entails all, a combination, or only one, of corresponding plurality of sub-layers of the photovoltaic layer(s), the encapsulation layer(s), the energy storing layer(s), the heating layer(s), the electric insulation layer(s), the thermal insulation layer(s), and the anti-reflection layer(s), to be screen-printed. The present embodiment is advantageous in that it provides for a versatile and dependable railway sleeper and smart sleeper module(s) in terms of need, requirements, and/or desires for a user. For example, screen printing at least one of said layers of the smart sleeper module(s) allows for a more compact railway sleeper. In addition, the weight of the railway sleeper may be reduced. Furthermore, the present embodiment enables said layers to be highly precisely designed in a time efficient manner. Additionally, the embodiment enables reproducibility and uniformity of the same item to a higher extent, for example a first and a second sub-layer of the energy storing layer(s). Screen printing at least one of said layers of the smart sleeper module(s) also allows for a more adaptable smart sleeper module(s) in regard to e.g., required and/or desired design properties, such as a curved or angled surface.

According to an embodiment of the present invention, the railway system may comprise coupling means configured to connect the at least one smart sleeper module of each of the at least two railway sleepers with each other. For example, the coupling means may be a bus cable to physically connect the at least two smart sleeper modules to each other. As another example, the coupling means may enable a communicative connection between the at least two smart sleeper modules. For example, the coupling means may be configured to transfer data and/or energy between the at least two smart sleeper modules. The present embodiment is advantageous in that it allows for a more versatile and adaptable railway system. For example, in an area with relatively low amount of daylight, the railway system comprising railway sleeper and coupling means may be configured to be powered at least partially from an external source. Furthermore, the present embodiment may facilitate sharing information between at least two railway sleepers. Such information may for example comprise soiling data indicating an amount of soiling on the smart sleeper module(s), the railway sleeper(s), and/or the railway tracks. For example, if snow is detected by a plurality of railway speeders, distal railway speeders may benefit from receiving information of said detected snow. The distal railway speeders may then for example deliberately reduce energy consumption of the railway sleepers, and/or increase emitted thermal energy from (a) heating layer(s) of the smart sleeper module(s).

According to an embodiment of the present invention, the smart sleeper module may comprise at least one of at least one energy storing layer and at least one heating layer, wherein the step of screen printing may further comprise screen printing at least one of the at least one energy storing layer and the at least one heating layer onto the at least one support structure to form the at least one smart sleeper module. Hence, the smart sleeper module may comprise both, or only one, of the energy storing layer(s) and the heating layer(s), where both, and only one of said layers may be screen printed. The present embodiment is advantageous in that excess energy generated by the photovoltaic layer(s) of the smart sleeper module(s) may be stored for later use in the energy storing layer(s). Thus, the energy storing layer(s) allows for (a) more versatile and adaptable smart sleeper module(s) in regard to e.g., a reduced dependency of immediate access to daylight energy. Also, the energy storing layer(s) of the smart sleeper module(s) may reduce the need for external power sources, which may be particularly useful in remote areas.

The present embodiment is further advantageous in that the emitted heat by the heating layer(s) may decrease the amount of accumulated soiling on the smart sleeper module(s). Hence, the present embodiment may ensure high operational safety for passing rail vehicles, and/or energy efficiency independent of, for example, weather conditions. The present embodiment is further advantageous in that screen printing the energy storing layer(s) and/or the heating layer(s) provides for a versatile and dependable railway sleeper and smart sleeper module(s) in terms of need, requirements, and/or desires for a user. For example, screen printing at least one of said layers of the smart sleeper module(s) allows for a more compact railway sleeper. In addition, the weight of the railway sleeper may be reduced. The present embodiment enables said layers to be highly precisely designed in a time efficient manner. Additionally, the embodiment enables reproducibility and uniformity of the same item to a higher extent, for example a first and a second sub-layer of the energy storing layer(s). Screen printing at least one of said layers of the smart sleeper module(s) also allows for a more adaptable smart sleeper module(s) in regard to e.g., required and/or desired design properties, for example forming a curved or angled surface. Screen printing also allows for a time efficient and cost-effective production method.

### Brief description of the drawings

Fig. 1 is a schematic perspective view of a railway sleeper according to an exemplifying embodiment of the present invention.
Fig. 2 is an enlarged schematic cross-sectional side view of a smart sleeper module according to an exemplifying embodiment of the present invention.
Fig. 3 is an enlarged schematic cross-sectional side view of a smart sleeper module according to an exemplifying embodiment of the present invention.
Fig. 4 is a schematic perspective view of a railway system according to an exemplifying embodiment of the present invention.
Fig. 5 is a schematic perspective view of a method for producing a smart sleeper module according to an exemplifying embodiment of the present embodiment.

### Detailed description

The present invention will now be described more fully hereinafter with reference to the accompanying figures, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

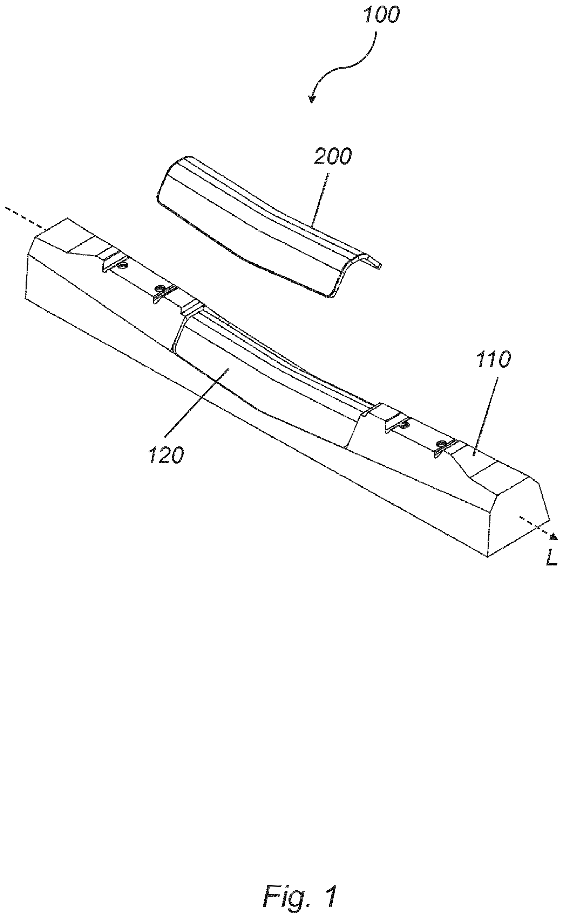

Fig. 1 is a schematic perspective view of a railway sleeper 100 according to an exemplifying embodiment of the present invention.

Fig. 1 shows a railway sleeper 100, comprising a railway sleeper body 110 extending in a length direction, L, and having a top portion and a bottom portion opposite to the top portion. The cross-section of the railway sleeper 100 according to Fig. 1 has the shape similar to a truncated triangle placed upon a rectangle. Nonetheless, the railway sleeper body 110 may have a different shape than depicted in Fig. 1. For example, the railway sleeper body 110 may have a rectangular cross-section, i.e., the shape of a conventional railway sleeper. According to another example, the railway sleeper body 110 may have the cross-section of a trapezoidal prism. Furthermore, the railway sleeper 100 may be a monoblock railway sleeper 100. The railway sleeper 100 may be formed by moulding, casting, or the like. Materials used to form the railway sleeper 100 may be e.g., concrete, steel, composite material, or the like, or a combination thereof.

The railway sleeper 100 further comprises at least one smart sleeper module 200, removably arranged on the top portion of the railway sleeper body 110. Hence, the smart sleeper module 200 may be removably fastened, fixed, connected, attached, to the railway sleeper 100. The smart sleeper module(s) 200 may be secured to the railway sleeper body 110 by a fastening mechanism. The fastening mechanism may comprise a screwing mechanism. Fig. 1 comprises (exactly) one smart sleeper module 200 removably arranged on the top portion of the railway sleeper body 110 for the sake of simplicity and clarity. Nonetheless, the railway sleeper 100 may comprise any number of smart sleeper modules 200 arranged on the railway sleeper body 110. The railway sleeper 100 may comprise a plurality of smart sleeper modules 200. The plurality of smart sleeper modules 200 may be removably arranged on the top portion of the railway sleeper body 110 in series and/or in parallel, in regard to the length direction, L.

The at least one smart sleeper module 200 comprises at least one support structure 210 comprising a first plurality of sub-layers 215. The support layer(s) 210 provide(s) a structural integrity to the smart sleeper module(s) 200. For example, the support layer(s) 210 may comprise a substrate which is suitable to arrange additional components, elements, members, or the like upon. The support structure(s) 210 may have shock-absorbing characteristics following a passing railway vehicle. It may also be desirable for the support structure(s) 210 to be at least partially chemical resistance. Exemplifying materials to utilize as support structure(s) 210 is fibre-reinforced Sheet Moulding Compound (SMC) and Bulk Moulding Compound (BMC).

The at least one smart sleeper module 200 further comprises at least one photovoltaic layer 220 arranged on the at least one support structure 210. The at least one photovoltaic layer 220 comprises a second plurality of sub-layers 225, and is configured to generate electric energy. The photovoltaic layer(s) 220 may comprise a low-light-condition solar cell. Hence, the photovoltaic layer(s) 220 may be configured to efficiently generate electricity from direct sunlight but also during low-light or diffuse conditions, such as during a cloudy day. Furthermore, the photovoltaic layer(s) 220 may comprise at least one thin-film solar cell. The thin-film solar cell(s) may comprise photoactive materials such as amorphous silicon (a-Si:H), microcrystalline silicon (mc-Si:H), gallium arsenide (GaAs), cadmium telluride (CdTe), and/or copper-indium-(gallium)-sulfur-selenium compounds. Additionally, thin-film solar cells may perform better in elevated temperatures, e.g., reducing the otherwise efficiency loss.

According to an example, the sub-layers 225 of the photovoltaic layer(s) 220 may comprise at least one translucent front electrode layer, at least one support structure layer, at least one photoactive layer comprising the photoactive material, at least one transport layer, at least one back electrode layer, and at least one protective layer at least partially enclosing the photovoltaic layer(s) 220. The support structure layer(s) may contribute to mechanical stability to the photovoltaic layer(s) 220, and/or to stabilize the photoactive material. The support structure layer may comprise various types of glass, polymethyl methacrylate (PMMA), metal foils, and/or plastic foils. The thickness of the support structure layer(s) may be within a range of 100 nm to 5 µm. The photoactive layer is preferably within the range of 50 nm to 5 µm in thickness. The transport layer(s) is favourable in maintaining charge separation. Furthermore, the transport layer(s) may comprise negative and positive arrangements of organic and/or inorganic materials, thus aiding in electron transport. The thickness of the transport layer may be between 50 nm and 5 µm. The back electrode layer is preferably between 100 nm and 15 µm thick, whereas the front electrode layer(s) may for example range between 100 nm and 5 µm in thickness. The sub-layers 225 may be stacked on top of each other, along a normal, N, to the surface of the smart sleeper module(s) 200. According to yet another example, the support structure layer(s) and the transport layer(s) are omitted, resulting in (a) thinner photovoltaic layer(s) 220.

The protective layer of the sub-layers 225 may be designed as an electrical insulation layer. Furthermore, the protective layer of the sub-layers 225 may comprise a plastic. The protective layer adjacent to the front electrode may be between 20 µm and 250 µm thick, whereas the protective layer adjacent to the back electrode may have a thickness ranging from 500 nm to 250 µm. To promote efficiency in terms of production time and/or material usage, if two photovoltaic layers 220 are arranged adjacent to each such that the protective layers of corresponding photovoltaic layer 220 are facing each other, it is feasible to design one of the photovoltaic layer 220 without said adjacent protective layer, whilst achieving an electric insulation layer for the two photovoltaic layers 220.

The at least one smart sleeper module 200 further comprises at least one encapsulation layer 230 at least partially enclosing the at least one smart sleeper module 200, wherein the at least one encapsulation layer 230 comprises a third plurality of sub-layers 235. Hence, the encapsulation layer(s) 230 may only enclose only a portion of the smart sleeper module(s) 200, or fully. The at least one encapsulation layer 230 of the at least one smart sleeper module 200 may be at least partially transparent. Thus, the encapsulation layer(s) 230 may be fully transparent, or partially transparent, i.e., translucent. In other words, incident light to the encapsulation layer(s) 230 would at least partially pass through the encapsulation layers(s) 230. This is especially advantageous in regard to the photovoltaic layer(s) 220, to increase the amount of incident light reaching the photovoltaic layer(s) 220. The at least one encapsulation layer 230 may be configured to be waterproof. This may be achieved by utilizing a resin during production of the encapsulation layer(s) 230. The encapsulation layer(s) 230 may be achieved through casting, laminating, or the like. According to an example, Ethylene Tetrafluoroethylene (ETFE), is utilized for the encapsulation layer(s) 230. It should be noted that each of the plurality of sub-layers 215, 225, 235 comprises different material compositions.

The railway sleeper body 110 of Fig. 1 further comprises a recess 120 arranged on the top portion of the railway sleeper body 110 and along the length direction, L, wherein the smart sleeper module 200 is removably arranged in the recess 120 of the railway sleeper body 110. It should be noted that the recess 120 is optional and thus may be omitted. According to Fig. 1, the top portion of the railway sleeper body 110 has a convex shape. It should be noted that the railway sleeper body 110 may have other shapes, such as a rectangular prism.

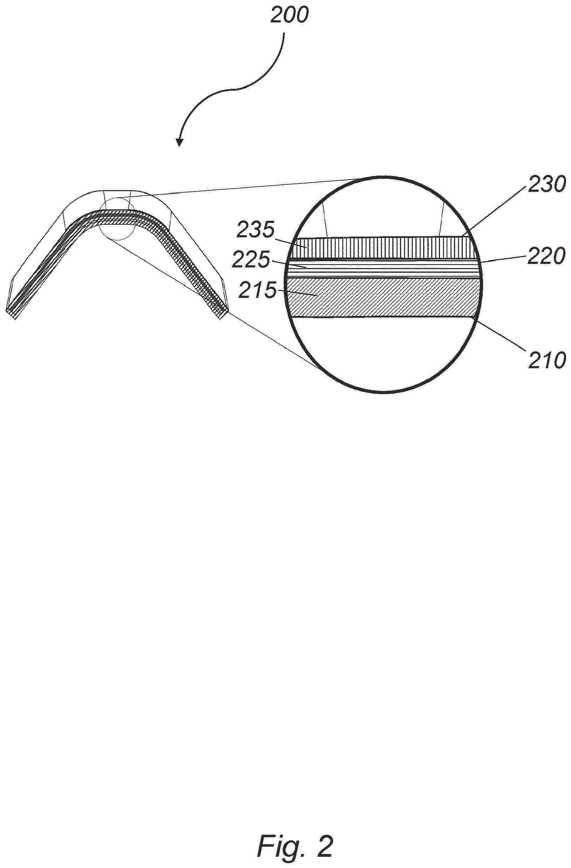

Fig. 2 is an enlarged schematic cross-sectional side view of a smart sleeper module 200 according to an exemplifying embodiment of the present invention. It should be noted that the smart sleeper module 200 shown in Fig. 2 has several features in common with the smart sleeper module 200 shown in Fig. 1, and it is hereby referred to Fig. 1 and the associated text for an increased understanding of some of the features and/or functions of the smart sleeper module 200.

The at least one smart sleeper module 200 in Fig. 2 has a first side and a second side opposite to the first side, wherein the first side of the at least one smart sleeper module 200 is configured to abut the railway sleeper body 110, and wherein the second side of the at least one smart sleeper module 200 has a convex shape. Hence, the first side of the smart sleeper module(s) 200 is arranged to face the railway sleeper body 110, whereas the second side of the smart sleeper module(s) 200 is arranged to face away from the railway sleeper body 110. The convex shape of the second side of the smart sleeper module(s) 200 may comprise varying angles. The smart sleeper module(s) 200 is (are) therefore optimized in regard to capturing of incident sunlight.

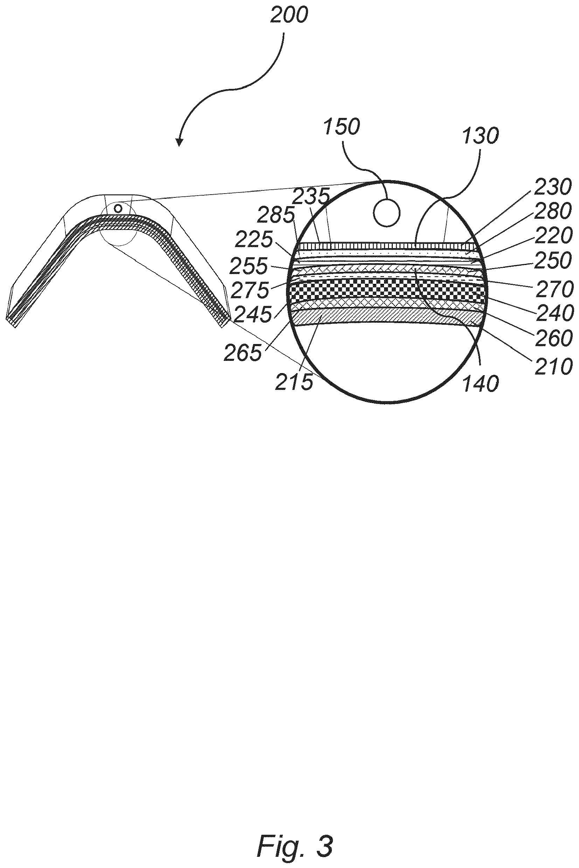

Fig. 3 is an enlarged schematic cross-sectional side view of a smart sleeper module 200 according to an exemplifying embodiment of the present invention. It should be noted that the smart sleeper module 200 shown in Fig. 3 has several features in common with the smart sleeper module 200 shown in Figs. 1 and 2, and it is hereby referred to Figs. 1 and 2 and the associated text for an increased understanding of some of the features and/or functions of the smart sleeper module 200.

The smart sleeper module(s) 200 is (are) at least partially flexible. Hence, all, or only a portion of the smart sleeper module 200 may be flexible. The flexibility of the smart sleeper module(s) 200 may facilitate installation and/or removal, as well as providing for a more versatile smart sleeper module 200 in regard to e.g., retrofitting existing railway sleepers 100. For the scenario where the smart sleeper module(s) 200 is (are) retrofitted to existing railway sleepers 100, it may be beneficial to include at least one support element to the railway sleepers 100, ensuring the structural integrity of the railway sleeper 100. The support element(s) may be concrete elements. Furthermore, the support element(s) may be arranged alongside side portions of the railway sleeper 100, and at least one of parallel and perpendicular arranged in relation to the length direction, L, of the railway sleeper 100.

Furthermore, the flexibility of the smart sleeper module(s) 200 reduces the risk of suffering damage due to mechanical stresses, such as vibrations from passing railway vehicles. Due to the flexibility of at least a portion of the smart sleeper module(s) 200, the smart sleeper module(s) 200 and/or the railway sleeper 100 may to a higher extent accommodate variances of coefficient of thermal expansion (CTE) among the different materials of the smart sleeper module(s) 200 and/or the railway sleeper 100.

The at least one smart sleeper module 200 in Fig. 3 comprises at least one energy storing layer 240 arranged on the at least one support structure 210 wherein the at least one energy storing layer 240 comprises a fourth plurality of sub-layers 245 comprising different material compositions from each of the other pluralities of sub-layers 215, 225, 235. The at least one energy storing layer 240 is configured to store at least a portion of the electric energy generated by the at least one photovoltaic layer 220. Hence, the at least one photovoltaic layer 220 may be electrically connected to the at least one energy storing layer 240. This enables transmittance of electric energy from the at least one photovoltaic layer 220 to the at least one energy storing layer 240. By "energy storing layer", it is here meant any component, element, member, or the like suitable to store electric energy.

The energy storing layer(s) 240 may comprise any type of energy storing means enabling storing electric energy. For example, the energy storing layer(s) 240 may comprise a battery and/or a capacitor. According to an example, the energy storing layer(s) 240 comprises two electrode layers separated by a separator layer. The separator layer comprises an electrolyte layer and a protective layer on either side facing the two electrode layers, respectively. The protective layers form an electric insulation layer and may for example comprise a plastic. To promote efficiency in terms of production time and/or material usage, if two the energy storing layers 240 are arranged adjacent to each other such that protective layers of corresponding the energy storing layer 240 are facing each other, it is feasible to design one of the energy storing layer 240 without said adjacent protective layer, whilst achieving an electric insulation layer for the two energy storing layers 240. For example, protective layers of the separator layer may be 20 µm to 250 µm thick.

The electrode layers of the energy storing layer(s) 240 may comprise carbon in various forms, such as activated carbon, activated carbon fibre, carbide-derived carbon, carbon aerogel, graphite, graphene, and/or carbon nanotubes. For example, electrode layers may range from 3 µm to 250 µm in thickness. Furthermore, the at least one electrode layer may comprise transition metal oxides such as ruthenium, iridium, iron, and/or manganese oxides, or electrically conductive polymers such as polypyrrole (PPy), polyaniline (PANI), pentacene, and/or polythiophene. The separator layer of the energy storing layer(s) 240 may comprise a porous plastic. Additionally, the separator layer may be within the range of 0.5 µm to 250 µm thick.

Furthermore, the electrolyte may comprise an aqueous electrolyte solution, an organic electrolyte solution, an ionic liquid, a superconcentrated electrolyte, and/or an electrically conductive polymer.

The at least one smart sleeper module 200 comprises at least one heating layer 250 arranged on the at least one support structure 210, wherein the at least one heating layer 250 comprises a fifth plurality of sub-layers 255 comprising different material compositions from each of the other pluralities of sub-layers 215, 225, 235, 245. The at least one heating layer 250 is configured to transform electric energy into thermal energy.

The heating layer(s) 250 may comprise at least one resistive heater. The heating layer(s) 250 may further comprise multiple conductor tracks. Thus, the heating layer(s) 250 may convert electric energy into thermal energy, and subsequently transfer the thermal energy to the surrounding environment, for example to layers of the smart sleeper module(s) 200. The direction of the thermal energy transmittance may be controlled based on thermal conductivity of the different layers 210, 220, 230, 240 of the smart sleeper module(s) 200.

The at least one heating layer 250 of the at least one smart sleeper module 200 in Fig. 3 is configured to transform at least a portion of the electric energy from at least one of the at least one photovoltaic layer 220 and the at least one energy storing layer 240 into thermal energy. Thus, the heating layer(s) 250 may be configured to transform only a portion, or all, of the electric energy from the photovoltaic layer(s) 220 and/or the energy storing layer(s) 240 into thermal energy. According to an example, the heating layer(s) 250 may extract electric energy from an external device and transform at least a portion of said electric energy into thermal energy.

The at least one heating layer 250 may be electrically connected to at least one of the photovoltaic layer(s) 220 and the at least one energy storing layer 240. This electric connection enables transmittance of electric energy from the photovoltaic layer(s) 220 and/or from the energy storing layer(s) 240, to the energy storing layer(s) 240.

The smart sleeper module 200 in Fig. 3 comprises at least one sensor 130 configured to generate soiling data indicating an amount of soiling on at least a front side of the photovoltaic layer 220, wherein the front side of the photovoltaic layer 220 is arranged to face away from the railway sleeper body 110. The sensor(s) 130 may be at least one of a thermocouple, a precipitation sensor, a load sensor, a humidity sensor, and a weight sensor. The sensor(s) 130 may be configured to detect, measure, determine, or the like an amount and/or characteristics of soiling, thus generating soiling data. The sensor(s) 130 is (are) configured to generate soiling data in relation to at least the front side of the photovoltaic layer(s) 220. Hence, the sensor(s) 130 may be connected to other areas of interest, in order to generate further soiling data in relation to said areas of interest. For example, if the railway sleeper 100 comprising the smart sleeper module(s) 200 is installed in a railway system, the sensor(s) 130 may be configured to generate soiling data in relation to the surrounding railway infrastructure, such as the railway tracks, switches, and/or frogs.

The smart sleeper module(s) 200 further comprises at least one control unit 140 configured to control the at least one heating layer 250 based on the soiling data. For example, the sensor(s) 130 may detect an amount of snow and ice accumulated on an area of interest, for example on the front side of the photovoltaic layer(s) 220, and generate soiling data. According to an example, the control unit(s) 140 may, based on the generated soiling data, increase the transmitted thermal energy from the heating layer(s) 250 in order to melt the accumulated snow and ice on the front side of the photovoltaic layer(s) 220. According to another example, the control unit(s) 140 may, based on the generated soiling data, reduce energy consumption of at least the railway sleeper 100.

As stated above, the area of interest from which to generate soiling data may include the surrounding railway infrastructure, such as the railway tracks, if the railway sleeper 100 is, e.g., installed in a railway system. Hence, the control unit(s) 140 may be configured to control the heating layer(s) 250, e.g., increase transmitted thermal energy, based on the generated soiling data from the surrounding railway infrastructure.

The smart sleeper module 200 comprises a connector 150 configured to electrically connect at least one of the least one photovoltaic layer 220 and the at least one energy storing layer 240 to a device, to provide electric energy to the device. The device may be an external device of the smart sleeper module 200 and/or the railway sleeper 100. For example, if the energy storing layer(s) 240 is (are) at full capacity, and the photovoltaic layer(s) 220 generates electric energy in abundance, the excess electric energy may be provided via the connector 150 to the (external) device.

The smart sleeper module 200 comprises at least one of at least one electric insulation layer 260, comprising a sixth plurality of sub-layers 265, at least one thermal insulation layer 270, comprising a seventh plurality of sub-layers 275, and at least one anti-reflection layer 280 comprising an eight plurality of sub-layers 285, arranged on the at least one support structure 210. Each of the sixth plurality of sub-layers 265, the seventh plurality of sub-layers 275, and the eight plurality of sub-layers 285 comprises different material compositions from each of the other pluralities of sub-layers 215, 225, 235, 245, 255.

The electric insulation layer(s) 260 may provide for (a) safer and more energy efficient smart sleeper module(s) 200, as it may prevent accidents or damages to a user and/ or the smart sleeper module(s) 200 caused by an unintended flow of electricity. Furthermore, the electric insulation layer(s) 260 may increase the longevity of the smart sleeper module(s) 200, as it may prevent undesired electrical conductivity between different electrical components. The thermal insulation layer(s) 270 may also provide for (a) more energy efficient smart sleeper module(s) 200, as well as improving the longevity of the smart sleeper module(s) 200, by controlling the transfer of heat. The anti-reflection layer(s) 280 is configured to minimize glare from the smart sleeper module(s) 200 to the surrounding environment, for example to train operators, aircraft operators, nearby residents, etc. The anti-reflection layer(s) 280 may be incorporated into the encapsulation layer(s) 230.

At least one of the at least one support structure 210, the at least one photovoltaic layer 220, the at least one encapsulation layer 230, the at least one energy storing layer 240, the at least one heating layer 250, the at least one electric insulation layer 260, the at least one thermal insulation layer 270, and the at least one anti-reflection layer 280, is screen printed. Hence, all, or only one of the different structures and layers 210, 220, 230, 240, 250, 260, 270, and 280 of Fig. 3 may be screen printed. The materials for producing said different layers 210, 220, 230, 240, 250, 260, 270, and 280 may be provided as pastes, to facilitate the screen-printing process. The printable paste may contain nanostructures. It should be noted that the order of the structures and layers 210, 220, 230, 240, 250, 260, 270, and 280 of the smart sleeper module(s) 200 may be different from the order described herein.

Furthermore, all, or only some, of the structures and layers 210, 220, 230, 240, 250, 260, 270, and 280 of the smart sleeper module(s) 200 may be at least partially flexible.

Thus, the layers of the smart sleeper module 200 of Fig. 2 comprising a support structure 210, a photovoltaic layer 220, and an encapsulation layer 230, may all be screen printed, a combination, or only one of them. According to an example, the photovoltaic layer 220 and the encapsulation layer 230 are screen printed on the support structure 210.

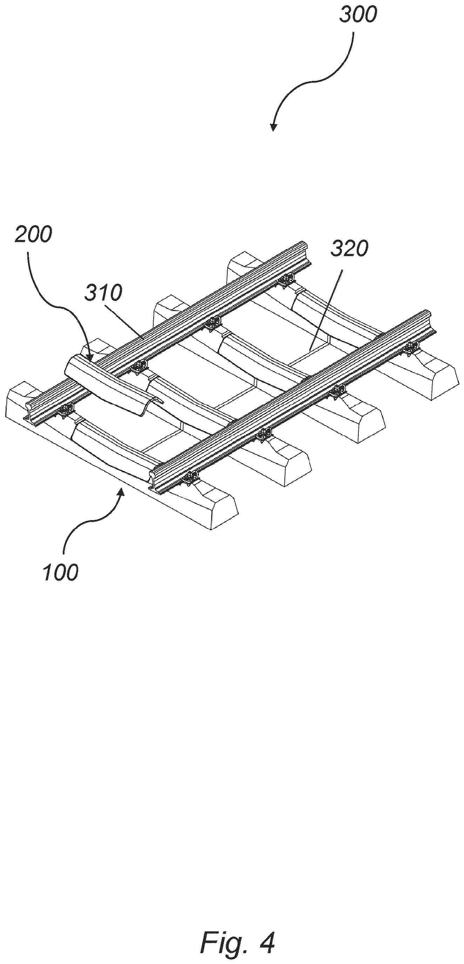

Fig. 4 is a schematic perspective view of a railway system 300 according to an exemplifying embodiment of the present invention. It should be noted that the railway sleeper 100 and the smart sleeper module 200 shown in Fig. 4 have several features in common with the railway sleeper 100 and the smart sleeper module 200 shown in Figs. 1 to 3, and it is hereby referred to Figs. 1 to 3 and the associated text for an increased understanding of some of the features and/or functions of the railway sleeper 100 and the smart sleeper module 200.

The railway system 300 in Fig. 4 comprises at least two railway sleepers 100 arranged parallel to each other in relation to their respective length direction, L, and railway tracks 310 arranged parallel to each other and perpendicular to the at least two railway sleepers 100. The railway tracks 310 are flexibly fastened to the at least two railway sleepers 100. The railway tracks 310 may be flexibly fastened to the railway sleepers 100 by flexible rail fastening means. The flexible rail fastening means provides for a secure fastening of the railway tracks 310 to the railway sleepers 100. The flexible rail fastening means also allows for thermal expansion and contraction, vibration dampening and/or absorption of shocks and/or stresses. Optionally, the railway system 300 comprises a transformer configured to transform low-voltage electric energy into high-voltage electric energy. For example, the transformer may be configured to transform at least a portion of at least one of the electric energy generated by the photovoltaic layer(s) 220 and stored in the energy storing layer(s) 240, which may typically be low-voltage electric energy, into high-voltage electric energy. Hence, the transformer may enable passing railway vehicles and/or the surrounding railway infrastructure to extract high-voltage electric energy from the railway system 300.

According to an example, the railway system 300 comprises coupling means 320 configured to connect the at least one smart sleeper module 200 of each of the at least two railway sleepers 100 with each other. According to an example, the coupling means 320 may be physical coupling means 320, i.e., physically coupling, connecting, joining, or the like at least two smart sleeper modules 200 to each other. More specifically, the coupling means 320 may be a bus cable. According to another example, the coupling means 320 may enable a communicative connection between the at least two smart sleeper modules 200. The coupling means 320 may be configured to transfer at least one of data and energy between the at least two smart sleeper modules 200.

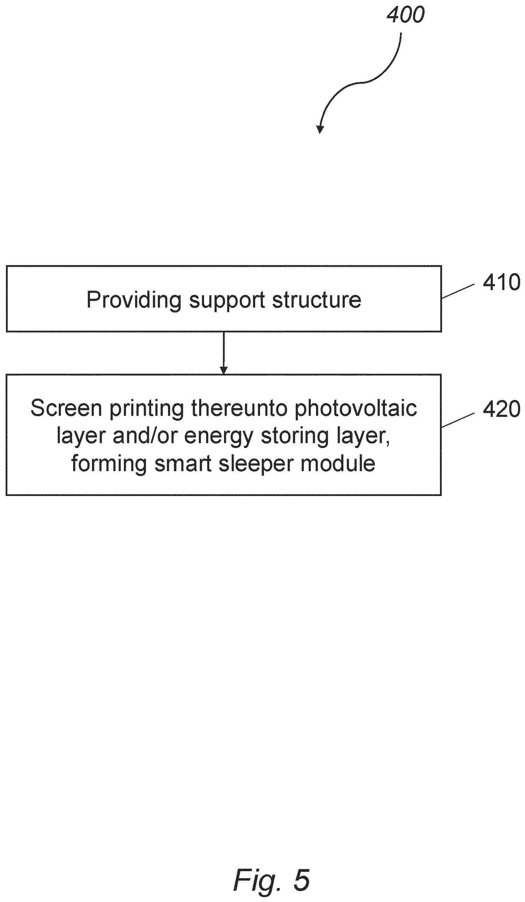

Fig. 5 is a schematic perspective view of a method for producing a smart sleeper module according to an exemplifying embodiment of the present embodiment. It should be noted that the smart sleeper module of the method 400 shown in Fig. 5 has several features in common with the smart sleeper module 200 shown in Figs. 1 to 4, and it is hereby referred to Figs. 1 to 4 along with the associated text for an increased understanding of some of the features and/or functions of the smart sleeper module in Fig. 5.

Fig. 5 discloses a method 400 for producing a smart sleeper module, the method comprising providing 410 the at least one support structure, and screen printing 420 at least one of the at least one photovoltaic layer and the at least one encapsulation layer on the at least one support structure, forming the at least one smart sleeper module. The support structure may be formed by at least one of moulding, laminating, thermoforming, bending, and pressing.

The photovoltaic layer(s) may be screen printed on the support structure. Furthermore, the encapsulation layer may be screen printed on the photovoltaic layer. Hence, the resulting smart sleeper module may constitute stacked layers along a normal to the surface of the smart sleeper module. According to an example, at least one of the photovoltaic layer(s) and the encapsulation layer(s) is screen printed onto a flexible film. The flexible film may thereafter be applied to the support structure by e.g., bonding, laminating, adhesion, or the like.

According to an example, the smart sleeper module comprises at least one of at least one energy storing layer and at least one heating layer, wherein the step of screen printing 420 further comprises screen printing at least one of the at least one energy storing layer and the at least one heating layer onto the at least one support structure to form the at least one smart sleeper module. According to an example, the photovoltaic layer(s), the energy storing layer(s), the heating layer(s), and the encapsulation layer(s) are arranged stacked on each other, along a normal to the surface of the smart sleeper module.

The person skilled in the art realizes that the present invention by no means is limited to the preferred embodiments described above. On the contrary, many modifications and variations are possible within the scope of the appended claims. For example, the railway sleeper 100, the recess 120, the smart sleeper module 200, etc., may have different shapes, dimensions and/or sizes than those depicted/described. Furthermore, the order of the at least one support structure 210, the at least one photovoltaic layer 220, the at least one encapsulation layer 230, the at least one energy storing layer 240, the at least one heating layer 250, the at least one electric insulation layer 260, the at least one thermal insulation layer 270, and the at least one anti-reflection layer 280 may be different from the order described herein.

## Claims

1. A railway sleeper (100), comprising
a railway sleeper body (110) extending in a length direction, L, and having a top portion and a bottom portion opposite to the top portion, and
at least one smart sleeper module (200), removably arranged on the top portion of the railway sleeper body, wherein the at least one smart sleeper module comprises
at least one support structure (210) comprising a first plurality of sub-layers (215),
at least one photovoltaic layer (220) arranged on the at least one support structure, wherein the at least one photovoltaic layer comprises a second plurality of sub-layers (225), and is configured to generate electric energy, and
at least one encapsulation layer (230) at least partially enclosing the at least one smart sleeper module, wherein the at least one encapsulation layer comprises a third plurality of sub-layers (235),
wherein each of the plurality of sub-layers comprises different material compositions.

2. The railway sleeper according to claim 1, wherein the railway sleeper body comprises a recess (120) arranged on the top portion of the railway sleeper body and along the length direction, L, wherein the at least one smart sleeper module is removably arranged in the recess of the railway sleeper body.

3. The railway sleeper according to claim 1 or 2, wherein the top portion of the railway sleeper body has a convex shape.

4. The railway sleeper according to any of the preceding claims, wherein the at least one smart sleeper module has a first side and a second side opposite to the first side, wherein the first side of the at least one smart sleeper module is configured to abut the railway sleeper body, and wherein the second side of the at least one smart sleeper module has a convex shape.

5. The railway sleeper according to any of the preceding claims, wherein the at least one smart sleeper module is at least partially flexible.

6. The railway sleeper according to any of the preceding claims, wherein the at least one smart sleeper module comprises at least one energy storing layer (240) arranged on the at least one support structure, wherein the at least one energy storing layer comprises a fourth plurality of sub-layers (245) comprising different material composition from each of the other pluralities of sub-layers, and is configured to store at least a portion of the electric energy generated by the at least one photovoltaic layer.

7. The railway sleeper according to any of the preceding claims, wherein the at least one smart sleeper module comprises at least one heating layer (250) arranged on the at least one support structure, wherein the at least one heating layer comprises a fifth plurality of sub-layers (255) comprises different material compositions from each of the other pluralities of sub-layers, and is configured to transform electric energy into thermal energy.

8. The railway sleeper according to claim 7, wherein the at least one heating layer of the at least one smart sleeper module is configured to transform at least a portion of the electric energy from at least one of the at least one photovoltaic layer and the at least one energy storing layer into thermal energy.

9. The railway sleeper according to claim 7 or 8, wherein the at least one smart sleeper module comprises
at least one sensor (130) configured to generate soiling data indicating an amount of soiling on at least a front side of the at least one photovoltaic layer, wherein the front side of the at least one photovoltaic layer is arranged to face away from the railway sleeper body, and
at least one control unit (140) configured to control the at least one heating layer based on the soiling data.

10. The railway sleeper according to any of the preceding claims, wherein the at least one smart sleeper module comprises a connector (150) configured to electrically connect at least one of the least one photovoltaic layer and the at least one energy storing layer to a device, to provide electric energy to the device.

11. The railway sleeper according to any of the preceding claims, wherein the at least one smart sleeper module comprises at least one of
at least one electric insulation layer (260), comprising a sixth plurality of sub-layers (265),
at least one thermal insulation layer (270), comprising a seventh plurality of sub-layers (275), and
at least one anti-reflection layer (280) comprising an eight plurality of sub-layers (285),
arranged on the at least one support structure,
wherein each of the sixth plurality of sub-layers, the seventh plurality of sub-layers, and the eight plurality of sub-layers comprises different material compositions from each of the other pluralities of sub-layers.

12. The railway sleeper according to any of the preceding claims, wherein at least one of the at least one support structure, the at least one photovoltaic layer, the at least one encapsulation layer, the at least one energy storing layer, the at least one heating layer, the at least one electric insulation layer, the at least one thermal insulation layer, and the at least one anti-reflection layer, is screen printed.

13. A smart sleeper module (200) according to any of claims 1 to 12.

14. A railway system (300) comprising
at least two railway sleepers (100) according to any of claims 1 to 12 arranged parallel to each other in relation to their respective length direction, L, and
railway tracks (310) arranged parallel to each other and perpendicular to the at least two railway sleepers, wherein the railway tracks are flexibly fastened to the at least two railway sleepers.

15. The railway system according to claim 14, comprising coupling means (320) configured to connect the at least one smart sleeper module of each of the at least two railway sleepers with each other.

16. A method (400) for producing a smart sleeper module according to claim 13, the method comprising
providing (410) the at least one support structure, and
screen printing (420) at least one of the at least one photovoltaic layer and the at least one encapsulation layer on the at least one support structure, forming the smart sleeper module.

17. The method according to claim 16, wherein the smart sleeper module comprises at least one of at least one energy storing layer and at least one heating layer, wherein the step of screen printing further comprises screen printing at least one of the at least one energy storing layer and the at least one heating layer onto the at least one support structure to form the at least one smart sleeper module.
